# EUROPEAN PATENT APPLICATION

(11) **EP 0 645 178 A1**
(43) Date of publication of application: **29.03.1995**
(21) Application number: 94113806.7
(22) Date of filing: 02.09.1994
(51) Int. Cl.: B01F 7/16, A47J 43/08

(54) **Device for processing liquid or paste foodstuffs**

(30) Priority: 24.09.1993 IT MI932041
(71) Applicant: GIANT S.r.l., I-41100 Modena (IT)
(72) Inventor: Cesari, Giuseppe, I-41100 Bologna (IT)
(74) Representative: Marietti, Giuseppe

(57) **Abstract**

A device for the processing of liquid or paste foodstuff substances comprises a container inside which are provided a primary rotating shaft to which are connected the means for mixing the substance and a second shaft to which are connected the means for emulsifying or agitating the substance. The rotating shafts are driven by independent motors and consist of a hollow external shaft and an internal shaft mounted coaxially one inside the other and rotating independently of each other. The mixing and emulsifying means are removably fitted to the respective shafts by sleeves coaxial with the shafts themselves.

## Description

The present invention relates to a device for processing liquid- or paste-type foodstuff substances which require agitation, mixing or emulsification.

Typical applications for the device according to the present invention are found in pasteurizers, dasher or beater apparatuses and, in particular, cream-makers.

Cream-makers are already known which generally comprise a cylindrical container with vertical axis, inside of which is one or more paddles which rotates at low speed and mixes the substance, the paddles being driven by an electric motor incorporated into the structure of the machine. However, such cream-makers are not suitable for the preparation of products which require emulsification or energetic agitation of the treated substance. These treatments necessitate the use of suitable devices which rotate at a relatively high speed compared to the mixing paddles.

A partial remedy to this drawback is achieved by adding an external motor unit, fitted above the lid of the container, whose drive shaft passes through a hole in the lid and carries means for agitating or emulsifying the substances on its opposite end.

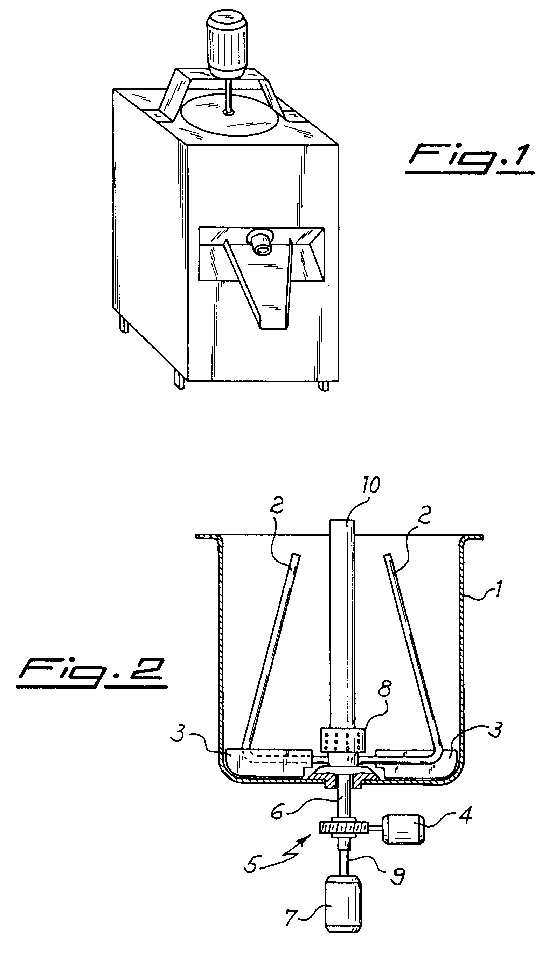

An arrangement such as that illustrated in Fig.1 of the attached drawings is impractical because of the obstruction caused by the external lid-mounted motor unit and its mounting, which interferes with the normal operations of loading the ingredients and checking the product during the treatment.

It is also obvious that an external electric motor with its power-supply cables both constitutes a potential hazard for the operator and is aesthetically unpleasing.

The object of the present invention is to propose a liquid- or paste-foodstuff processing device which overcomes the drawbacks created by parts fitted above the lid of the container and which enables both the simple mixing treatment and the simultaneous mixing and emulsifying or agitation treatment to be carried out.

A further object of the present invention is to provide a liquid- or paste-foodstuff processing device which is safer for the operator.

These objects are achieved by the present invention which relates to a liquid- or paste-foodstuff processing device, of the type comprising a container inside which is a primary rotating shaft to which are attached means for mixing the substance and a secondary rotating shaft to which are attached means for emulsifying or agitating the substances, characterized in that said rotating shafts comprise an internal shaft and an external hollow shaft which are mounted coaxially one inside the other and which can rotate independently of each other.

The present invention also relates to any liquid- or paste-foodstuff processing device characterized in that it comprises a devise as described in Claims 1 to 9.

The advantages of the present invention will be clear from the following description, given by way of illustration and not with limiting purposes, with reference to the attached drawings in which :
- figure 1 is a perspective view of a known type of cream-maker;
- figure 2 is a partly sectioned schematic elevation view of a cream-maker according to the present invention;
- figure 3 is an enlarged view of a detail of figure 2;
- figure 4 is an enlarged view of another detail of figure 2;
- figures 5A-5D are elevation views of individual elements of the detail shown in figure 4; and
- figures 6A-6D are plan views of the elements shown respectively in figure 5A-5D.

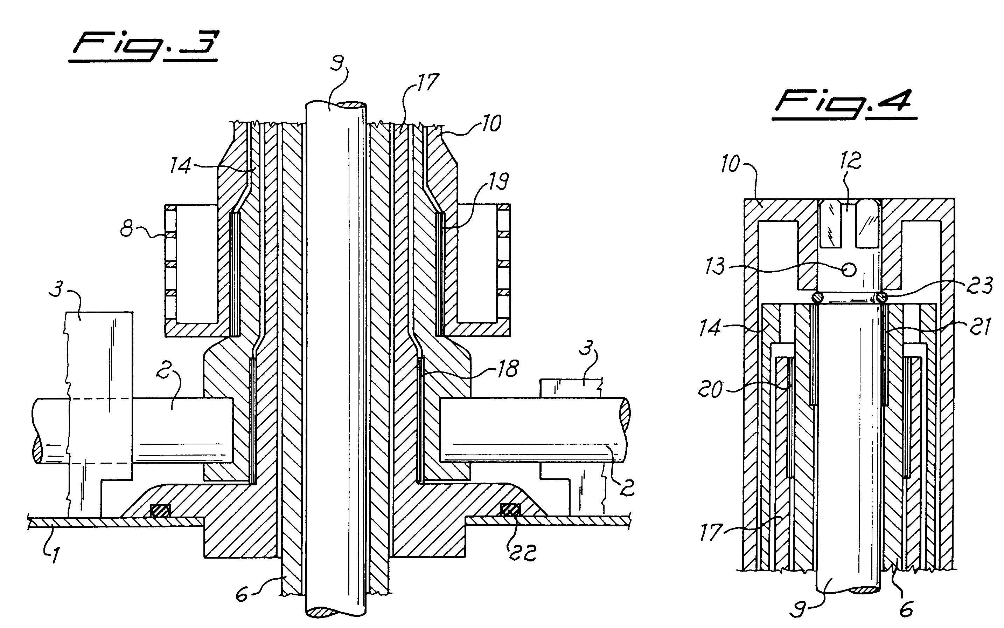

Figure 2 shows a liquid- or paste-foodstuff processing device comprising a container 1 inside which are provided means 2 for mixing the substance and one or more scraping paddles 3 to remove the substance from the floor of the container 1 during the treatment. The means 2 for mining the substance are connected to a primary shaft 6 and rotated at a low speed by a motor 4 through reduction gears 5 where necessary. A second motor 7 drives the means 8 for emulsifying the substance through a second rotating shaft 9.

According to an advantageous feature of the present invention the shafts 6 and 9 are coaxially mounted one inside the other and can rotate independently of each other. In other words, shaft 6 which drives the mixing means 2 is a hollow cylinder which houses shaft 9 which drives the means 8 for emulsifying the substance.

In this way, an external motor is not necessary, and the aforementioned drawbacks for the devices already known, such as that illustrated in fig.1, are avoided.

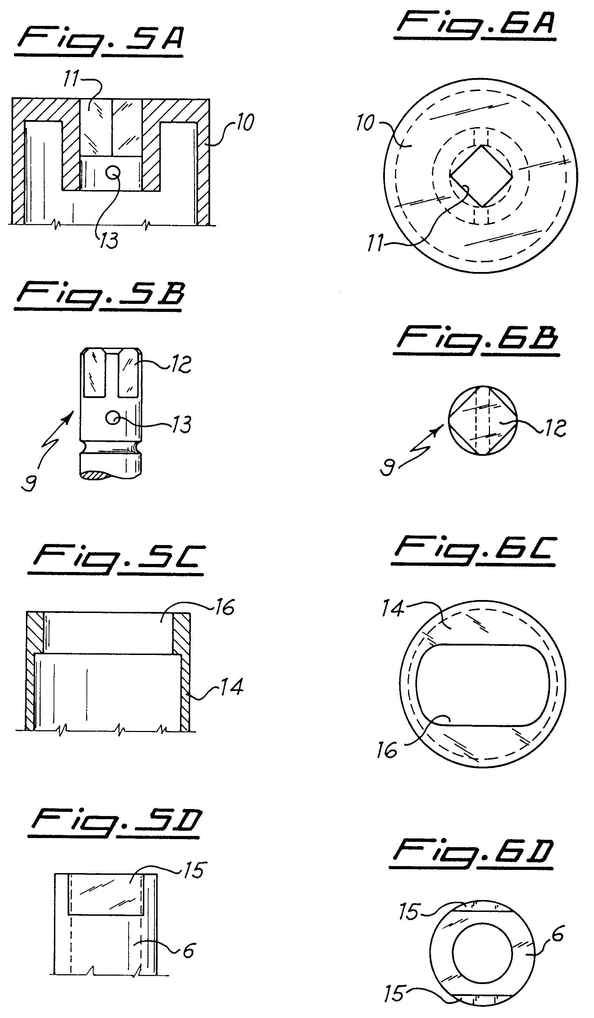

The layout of the rotating paddles 6 and 9 is shown more clearly in figures 3 and 4, which show enlarged detail of the point of entry of the two shafts 6 and 9 into the container 1 and their extremities.

The emulsifying means 8 are connected to the internal shaft 9 by a primary sleeve 10 provided with means for engaging the internal shaft 9 at the extremity opposite the driven end. In particular, the extremity 12 of the internal shaft 9 is square in cross-section to allow it to engage in a similarly-shaped seat (see figures 5A and 6A) in the extremity of the sleeve 10.

There is preferably a transverse hole 13 near the extremity 12 of shaft 9 and a corresponding transverse hole 13 near the seat 11 in the extremity of the sleeve 10, for the insertion of a split pin or keeper for increased safety.

This has the advantage of making the unit composed of the sleeve 10 and the removable emulsifyng means 8, either in the case of no treatment additional to the basis mixing of the substance being required or to substitute it with other means, e.g. for agitation.

The mixing means 2 are connected to the external shaft 6 coaxial with the internal shaft 9, by means of a second sleeve 14, internal of the primary sleeve 10 and coaxial with it. The second sleeve 14 is also fitted at its extremity with means for engaging the driven external shaft 6 at the extremity opposite the driven end. For example, as illustrated in figs 5C, 6C, 5D and 6D, the shaft 6 has a pair of flats 15 with rounded-off corners on the extremity which allow that extremity to be fitted into a similarly shaped seat 16 in the extremity of sleeve 14 and be rotated by the said sleeve 14.

The shaft 14 to which are connected the mixing means 2 and the scraping paddles 3 can be removed from shaft 6 to facilitate the necessary cleaning and maintenance operations inside the container 1.

There is a third sleeve 17, fixed to the base of the container 1 and solid with it. The coaxial shafts 6 and 9 are internal to this sleeve 17 and can rotate freely; the second and first sleeves, 14 and 10 respectively are outside the sleeve 17.

The concentric alignment of the various coaxial elements is ensured by bushes with a low coefficient-of-friction substance. In particular, in figure 3 a bush 18 is located between the sleeve 14 and the third sleeve 17 at the level of the attachment of the mixing means 2; likewise a bush 19 is located between the first sleeve 10 and the second sleeve 14 at the level of the emulsifying means 8. At the upper extremity of the coaxial elements (see figure 4) a bush 20 is located between the third sleeve 17 and the hollow shaft 6; likewise a bush 21 is located between the hollow shaft 6 and the internal shaft 9.

A ring seal 22 (see figure 3) is located at the base of the fixed third sleeve 17 to ensure the seal between the sleeve 17 and the container 1. A further ring seal 23 (see figure 4) is fitted as a precaution on the shaft 6 to prevent any infiltration of ingredients or the substance from the seat 11 of the first sleeve 10 and the extremity 12 of the shaft 9.

The shafts 6 and 9 are driven by independent motors 4 and 7 respectively and are preferably contra-rotating. Thus the vortex created by the emulsifying means 8 is reduced by the mixing means 2 and the scraper paddles 3 rotating in the opposite direction.

## Claims

1. A liquid- or paste-foodstuff processing device, of the type comprising a container inside which is provided a primary rotating shaft to which are attached means for mixing the substances and a secondary rotating shaft to which are attached means for emulsifying or agitating the substance, characterized in that said rotating shafts comprise an internal shaft and an external hollow shaft which are mounted coaxially one inside the other and which can rotate independently of each other.

2. A device according to claim 1, characterized in that said means for emulsifying or agitating the substance are removable from its respective shaft.

3. A device according to claim 2, characterized in that said means for emulsifying or agitating the substance are connected to the internal shaft of said coaxial shafts by a first sleeve provided at its extremity with means for engaging said internal shaft at the extremity opposite to the driven extremity to allow said first sleeve to be rotated by said internal shaft.

4. A device according to claim 1, characterized in that said means for mixing the substance are removable from its respective shaft.

5. A device according to claim 4, characterized in that said means for mixing the substance are connected to the external shaft of said coaxial shafts by a second sleeve provided at its extremity with means for engaging said external shaft at the extremity opposite to the driven extremity to allow said second sleeve to be rotated by said external shaft.

6. A device according to any of the claims 2 to 5, characterized in that said second sleeve is mounted coaxially inside said first sleeve and it is able to rotate independently of said first sleeve.

7. A device according to any of the preceding claims, characterized in that said shafts are mounted, free to rotate, inside a third sleeve which is solid with the container and coaxial with said first and second sleeves, said first and second sleeves being mounted outside said third sleeve and being able to rotate independently of said third sleeve.

8. A device according to any of the preceding claims, characterized in that said shafts are contra-rotating.

9. A device according to any of the preceding Claims, characterized in that said shafts are driven by independent motors.

10. A cream-maker for liquid or paste foodstuff substances, characterized in that it comprises a device as described in the Claims 1 to 9.
